## Europäisches Patentamt

## European Patent Office

## Office européen des brevets

(19)

(11) Veröffentlichungsnummer: **0 073 882**

**A1**

(12) # EUROPÄISCHE PATENTANMELDUNG

(21) Anmeldenummer: **82105157.0**

(22) Anmeldetag: **12.06.82**

(51) Int. Cl.³: **G 02 B 7/18**
**G 02 B 5/10, F 24 J 3/02**

(30) Priorität: **10.07.81 DE 3127222**

(43) Veröffentlichungstag der Anmeldung:
**16.03.83 Patentblatt 83/11**

(84) Benannte Vertragsstaaten:
**AT BE CH DE FR GB IT LI LU NL SE**

(71) Anmelder: **Bomin-Solar GmbH & Co KG**
**Industriestrasse 8-10**
**D-7850 Lörrach(DE)**

(72) Erfinder: **Kleinwächter, Hans Jürgen**
**Lettenweg 32**
**D-7850 Lörrach(DE)**

(72) Erfinder: **Kleinwächter, Johann, Prof. Dr. Ing.**
**Lettenweg 40**
**D-7850 Lörrach(DE)**

(74) Vertreter: **Beil, Walter, Dr. et al,**
**BEIL, WOLFF & BEIL Rechtsanwälte Adelonstrasse 58**
**D-6230 Frankfurt am Main 80(DE)**

(54) **Leichter verformbarer grossflächiger Sammelspiegel.**

(57) Großflächige Paraboloidspiegel zur Konzentration von Sonnenlicht oder zur Abbildung schwacher astronomischer Lichtquellen durch die elastische Verformung vorgespannter, verspiegelter, dünner Membrane, bei denen die längs ihres geschlossenen Umfanges starr eingespannten Membrane entweder durch elektrische, magnetische oder Lichtdruckwirkung in der geeigneten Weise verformt werden. Dabei können für Spiegel mit relativ kleinen Brennweiten die Verformungskräfte durch elektrische bzw. magnetische Felder mit konstanter oder ausreichend hoher Frequenz erzeugt werden, für größere Brennweiten - ohne die Möglichkeit der Feinkorrektur von Paraboloidabweichungen - durch auftreffende Lichtphotonen.

$$P_{elekt} = \frac{\epsilon_0 E^2}{2} \quad (4)$$

Fig. 2

EP 0 073 882 A1

unsere Nr. 23 555

BOMIN-SOLAR GmbH & Co. KG

D-7850 Lörrach

"Extrem leichter, großflächiger Sammelspiegel mit
elektrischen, magnetischen oder durch Lichtdruck
verformten elastischen Spiegeln"

## 1. Einleitung

Da die elektromagnetischen Lichtwellen exponentiell
abklingend in metallische Spiegelschichten eindringen,
genügt eine Aluminiumschicht von $\Delta = \sqrt{\dfrac{1}{\varkappa\, \mu\, f}} = 10^{-8}$ m

Dicke, um mehr als 90 % des einfallenden, sichtbaren
Lichtes zu reflektieren.

Das erlaubt den Bau von materialsparenden Spiegeloptiken für Solarenergiegewinnung auf der Erde und
im Weltraum sowie astronomische Abbildungsoptiken
in schwerelosen Raumstationen. Die erforderliche Formgebung erfolgt bisher nach von uns entwickelten Technologien durch Ausbildung einer Gleichgewichtsfläche
elastischer spiegelnder Folie vernachlässigbarer Biegesteifigkeit. Diese Folie ist an einem kreisförmigen
starren Ring eingespannt und schließt einen flachen
scheibenförmigen Raum ab, der unter Unterdruck steht.

Unter dem Einfluß der Tangentialspannung $\sigma_s$
der Membran stellt sich eine Gleichgewichtsform der
Spiegelfolien, die durch die Differentialgleichung

$$\frac{1}{\rho_1} + \frac{1}{\rho_2} = -\frac{p}{\sigma_s}$$

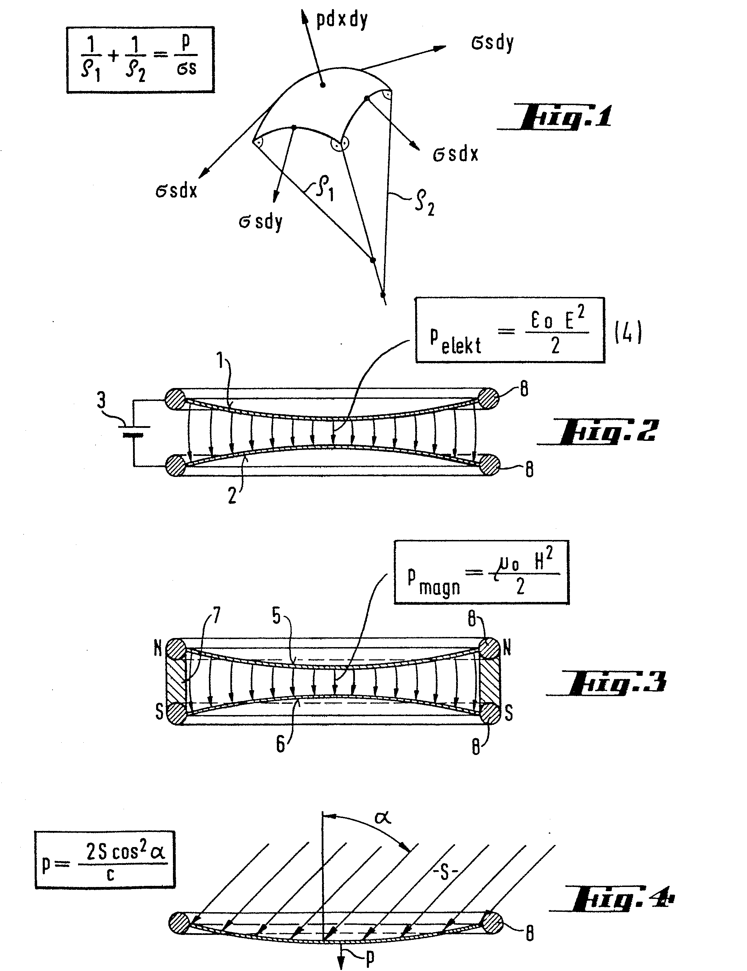

beschrieben ist. Dabei bedeutet $1/\rho_1 + 1/\rho_2$
die Gaußsche Krümmung und p den Normaldruck auf die
Membran. Die mathematischen Beziehungen sind in Fig. 1
perspektivisch dargestellt.

2. Elektrische Spiegelverformung

Erfindungsgemäß soll nach Fig. 2 der Normaldruck p
durch die Maxwellsche Zugspannung $p_{elek.} = \varepsilon_0\frac{E^2}{2}$ (4)
eines elektrischen Feldes erzeugt werden, das sich
zwischen der leitenden Spiegelmembran (1) und einer
dazu geeigneten, geformten Gegenelektrode (2), die an
die Hochspannungsquelle (3) angeschlossen ist,
ausbildet.

Für eine typische Feldstärke E = $10^4$ V/mm und
$\varepsilon_0 = 8,859.10^{-12} \frac{As}{Vm}$ errechnet sich $p_{elek} = 443$ N/m²

Durch Ausbildung der Gegenelektrode (2) in viele Einzelelektroden mit beliebig steuerbarer Potentialverteilung
läßt sich erfindungsgemäß die Feldstärke E auf der
Spiegelelektrode zwecks Feinjustierung in gewünschter Weise verteilen. Die Spannungsquelle kann dabei eine
hohe Gleich- oder Wechselspannung ausreichend hoher
Frequenz darstellen.

## 3. Magnetische Spiegelverformung

Analog zur elektrischen Druckkraftverteilung läßt
sich erfindungsgemäß nach Fig. 3 auch die Maxwellsche
Zugspannung in Feldrichtung der magnetischen Induktion

$$p_{max} = \frac{\mu_o}{2} H^2 = 1 \text{ atü bei } B = 0,5 \text{ Tesla}$$

zur Verformung magnetischer Spiegelmembrane benützen.

Beispielsweise stellt (5) die Spiegelmembran und
(6) den mechanisch justierbaren Gegenpol dar, die
beide magnetisch leitend sind. Das zwischen (5) und
(6) sich ausbildende Gleichfeld wird durch den permanent
magnetischen Ring (7) erzeugt.

## 3. Durch Sonnenlicht verformter Solarkonzentratorspiegel

Wegen der unter 1. erwähnten geringen Spiegeldicke S
und somit geringen Massenbelegung kann erfindungsgemäß
auch der elektromagnetische Sonnenlichtdruck nach
Fig. 4  zum Formen großer Solarkonzentratorspiegel
genutzt werden.

Da das unter dem Winkel $\alpha$ von einem Spiegel reflektierte
Licht den Druck

$$p_{Licht} = \frac{2 S}{c} \cos^2\alpha \quad \text{ausübt,}$$

mit einem Lichtfluß von $S = 1,36 \text{ kW/m}^2$ für den erdnahen Weltraum und der Lichtgeschwindigkeit $c = 3.10^8$
m/sec ist

$$p = 9,4 \quad 10^{-6} \quad N/m^2$$

Wegen der Schwerelosigkeit antriebsloser Raumstation
können auf diese Weise großflächige Sammelspiegel
zum Konzentrieren von großen Strahlungsleistungen
über ebenfalls massearme steife Randringe (8)
aufgespannt werden.

Patentansprüche

1. Großflächiger Spiegel zur Konzentration des Sonnenlichtes oder zur Abbildung schwacher astronomischer
   Lichtquellen dadurch gekennzeichnet, daß der
   abbildende oder konzentrierende Spiegel aus einer
   vorgespannten Folie besteht, die durch die Maxwellschen
   Zugkräfte $\frac{\varepsilon_o E^2}{2}$ elektrischer Felder die gewünschte
   optische Form annimmt.

2. Anordnung nach 1. dadurch gekennzeichnet, daß der
   abbildende oder konzentrierende Spiegel durch die
   Maxwellschen Zugkräfte $\frac{\mu_o H^2}{2}$ magnetischer Felder
   die gewünschte optische Form annimmt.

3. Anordnung nach 1. dadurch gekennzeichnet, daß der
   Spiegel durch die elektromagnetischen Lichtdruckkräfte $\frac{2 S}{c}$ die gewünschte Form annimmt.

4. Anordnung nach 1. und 2 dadurch gekennzeichnet,
   daß die elektrischen bzw. magnetischen Felder
   entweder konstant oder mit ausreichend hoher
   Frequenz oszillieren.

5. Anordnung nach 1. dadurch gekennzeichnet, daß durch
   mechanische Formgebung der rückseitigen Elektrodenfläche und seiner elektrischen Potentialverteilung
   die Spiegelfläche nachjustiert werden kann.

6

6. Anordnung nach 2. dadurch gekennzeichnet, daß
   durch mechanische Formgebung der rückseitigen Polfläche und seiner magnetischen Potentialverteilung
   die Spiegelfläche nachjustiert werden kann.

$$\frac{1}{\mathcal{S}_1} + \frac{1}{\mathcal{S}_2} = \frac{p}{\sigma s}$$

pdxdy

σsdy

σsdx

σsdx

σsdy

$\mathcal{S}_1$

$\mathcal{S}_2$

*Fig.1*

$$p_{elekt} = \frac{\varepsilon_0 E^2}{2} \quad (4)$$

*Fig.2*

$$p_{magn} = \frac{\mu_0 H^2}{2}$$

*Fig.3*

$$p = \frac{2S\cos^2\alpha}{c}$$

*Fig.4*

# EUROPÄISCHER RECHERCHENBERICHT

Europäisches
Patentamt

EP 82 10 5157

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | G 02 B 7/18 |
| X | FR-A-1 525 499 (F.T.I.) | 1 | G 02 B 5/10 |
| | * Zusammenfassung; Figur * | | F 24 J 3/02 |
| | --- | | |
| A | US-A-4 179 193 (R.B. GILLETTE) | 1 | |
| | * Ansprüche * | | |
| | --- | | |
| A | DE-B-1 199 017 (BÖLKOW) | 1 | |
| | * Ansprüche * | | |
| | --- | | |
| A | US-A-2 920 529 (R. BLYTHE) | 1,2 | |
| | * Anspruch 1; Figuren * | | |
| | ----- | | |

RECHERCHIERTE SACHGEBIETE (Int. Cl. ³)

G 02 B 7/18
G 02 B 5/10

Der vorliegende Recherchenbericht wurde für alle Patentansprüche erstellt.

| Recherchenort | Abschlußdatum der Recherche | Prüfer |
|---|---|---|
| DEN HAAG | 20-10-1982 | PFAHLER R. |